# EUROPÄISCHE PATENTSCHRIFT

(11) **EP 3 755 648 B1**
(45) Veröffentlichungstag und Bekanntmachung des Hinweises auf die Patenterteilung: **16.03.2022**
(21) Anmeldenummer: 19700130.8
(22) Anmeldetag: 03.01.2019
(51) Int. Cl.: B65G 47/86, B67C 3/24

(54) **GREIFER FÜR EIN BEHÄLTERTRANSPORTSYSTEM**
GRIPPER FOR A CONTAINER TRANSPORT SYSTEM
GRAPPIN POUR UN SYSTÈME DE TRANSPORT DE CONTENANTS

(30) Priorität: 23.02.2018 DE 102018104112
(43) Veröffentlichungstag der Anmeldung: 30.12.2020
(73) Patentinhaber: KHS GmbH, 44143 Dortmund (DE)
(72) Erfinder: BEKTASEVIC, Damir, 65187 Wiesbaden (DE); FAHLDIECK, Andreas, 55743 Idar-Oberstein (DE)
(86) Internationale Anmeldenummer: PCT/EP2019/050099
(87) Internationale Veröffentlichungsnummer: WO 2019/161979

(56) Entgegenhaltungen:
- EP-A1- 1 930 259
- EP-A1- 2 159 172
- WO-A2-2017/080644
- DE-U1- 29 802 011

## Beschreibung

Die Erfindung betrifft einen Greifer für ein Behältertransportsystem, insbesondere zum Einzeltransport stehender Behälter, mit zwei zueinander verschwenkbar angeordneten Greifarmen, einer rotierbaren Steuereinheit zum Verschwenken der Greifarme, wobei die Steuereinheit zwischen den Greifarmen angeordnet ist, sowie wenigstens einem die beiden Greifarme aufeinander zu vorspannenden Federelement. Weiterhin betrifft die Erfindung eine Transportvorrichtung für Behälter, insbesondere einen Transportstern, mit mehreren Greifern. Schließlich betrifft die Erfindung ein Verfahren zum Greifen eines Behälters mittels eines Greifers.

Greifer sowie mehrere Greifer umfassende Transportvorrichtung sind in vielfältiger Ausgestaltung aus dem Stand der Technik bekannt. Dabei werden die Greifer beispielsweise zum Transport von Behältern bei der Produktion und Verpackung von Gütern, insbesondere Nahrungsmitteln, verwendet. Ein spezieller Anwendungsbereich solcher Greifer ist der Einzelbehälter-, insbesondere Einzelflaschentransport, in Behälterbehandlungs-, Behälterreinigungs-, Abfüll-, Etikettier- oder Transportanlagen. Dabei ist es bekannt, einen Transportstern aus zahlreichen unmittelbar aneinander angeordneten Greifern zu bilden, der jeweils einen Behälter in einem Greifer zwischen einer Aufnahmeposition und einer Abgabeposition entlang des Transportsterns transportiert.

Aus der Druckschrift EP 2 159 172 A1 ist bereits ein Transportstern für Gefäße mit einem rotierbaren Grundkörper und mehreren über dessen Umfang verteilten Greifeinrichtungen zum Greifen der Gefäße bekannt, wobei jede Greifeinrichtung paarweise korrespondierende, insbesondere zum Grundkörper radial angeordnete Greifarme aufweist, die durch eine Zentrierverzahnung in ihrer Greifbewegung miteinander gekoppelt sind.

Diese aus dem Stand der Technik bekannten Greifer sowie daraus gebildete Transportsterne haben jedoch zahlreiche Nachteile. Zunächst sind diese Greifer kompliziert aufgebaut und daher zum einen teuer in der Herstellung und zum andere anfällig für Defekte und Fehlfunktionen. Weiterhin schließen die bekannten Greifer nicht vollständig gleichmäßig und kontinuierlich und darüber hinaus kommt es konstruktionsbedingt regelmäßig zu einer unsymmetrischen Greifarmführung beim Schließen der Greifarme. Diese ungleichmäßige und unsymmetrische Betätigung führt dann dazu, dass der zu greifende Behälter beim Greifen verschoben wird, was zum einen zu einem ungenauen oder sogar fehlerhaften Greifen des Behälters führen kann und zum anderen bei einem geöffneten und mit Flüssigkeit befüllten Behälter zu einem Überschwappen des Produktes im Behälter führt. WO 2017/080644 A2 offenbart einen Greifer nach dem Oberbegriff des Anspruchs 1.

Der Erfindung liegt daher die Aufgabe zu Grunde, einen Greifer sowie eine Transportvorrichtung bereitzustellen, die einfach aufgebaut, kostengünstig herzustellen und besonders fehler- und fehlfunktionsfrei betrieben werden können und dabei besonders genau und zuverlässig Behälter greifen können.

Die Aufgabe wird erfindungsgemäß durch einen Greifer gemäß Anspruch 1, durch ein Verfahren zum Greifen eines Behälters nach Anspruch 13 sowie eine Transportvorrichtung gemäß Anspruch 14 gelöst. Vorteilhafte Weiterbildungen der Erfindung sind in den abhängigen Ansprüchen angegeben.

Der erfindungsgemäße Greifer für ein Behältertransportsystem, insbesondere zum Einzeltransport stehender Behälter, weist zwei zueinander verschwenkbar angeordnete Greifarme und eine rotierbare Steuereinheit zum Verschwenken der Greifarme auf, wobei die Steuereinheit zwischen den Greifarmen angeordnet ist. Weiterhin ist ein die beiden Greifarme aufeinander zu bzw. auf eine geschlossene Stellung der Greifarme vorspannendes Federelement vorgesehen. An der Steuereinheit sind mindestens zwei Steuerrollen um eine zentrale Steuerachse schwenkbar und/oder rotierbar angeordnet und an jedem der Greifarme ist wenigstens eine innere Steuerfläche vorgesehen, wobei die mindestens zwei Steuerrollen zum Verschwenken der Greifarme mittels der Steuereinheit auf jeweils einer Steuerfläche eines Greifarms gleitend und/oder abrollend geführt sind und dabei unter der die Greifarme schließenden Kraft des wenigstens einen Federelements die beiden Greifarme öffnend oder schließend bewegen können.

Durch das Zusammenwirken der Steuerrollen der Steuereinheit mit den Steuerflächen der Greifarme wird in besonders einfacher Weise eine besonders genaue Steuerbarkeit des Greifens erreicht, wobei der Greifer aufgrund des mechanisch einfachen Aufbaus besonders günstig herzustellen ist. Zudem ist das Risiko technischer Defekte gering. Darüber hinaus ermöglicht die Verwendung einer Steuerkurve ein besonders kontinuierliches und gleichmäßiges sowie besonders gut synchronisiertes Schließen der beiden Greifarme, sodass auch ein mit einer Flüssigkeit gefüllter, unverschlossener Behälter ohne ein Verschütten oder Herausschwappen der Flüssigkeit gegriffen werden kann. Hierbei ist insbesondere vorteilhaft, wenn gegenüberliegende, zusammenwirkende Greifarme nicht über ein form- und/oder kraftschlüssiges Element wie beispielsweise eine Verzahnung gekoppelt sind und sich nicht gegenseitig antreiben. Somit kann ein einzelner Greifarm bzw. dessen Steuerflächen bei sehr großen Kräften in Umfangs- bzw. in Transportrichtung einseitig von den Steuerrollen der Steuereinheit abheben.

Das erfindungsgemäße Verfahren zum Greifen eines Behälters mittels eines Greifers, der zwei zueinander verschwenkbar angeordnete Greifarme, wenigstens ein die beiden Greifarme aufeinander zu vorspannendes Federelement sowie eine zwischen den Greifarmen angeordnete rotierbaren Steuereinheit zum Verschwenken der Greifarme aufweist, wobei an jedem der Greifarme wenigstens eine innere Steuerfläche vorgesehen ist, auf der eine um eine zentrale Steuerachse der Steuereinheit schwenkbare und/oder rotierbare Steuerrolle gleitend und/oder abrollend geführt ist, umfasst als Verfahrensschritten ausgehend von einer geschlossenen Position der Greifarme zunächst ein Rotieren der zentralen Steuerachse um eine Viertel Umdrehung, wobei die mindestens zwei Steuerrollen jeweils auf einer Steuerfläche abrollen und die Greifarme entgegen der Kraft des Federelements in eine geöffnete Position bringen, gefolgt von der Aufnahme eines Behälters in einen Haltebereich zwischen den beiden Greifarmen und schließlich einem Rotieren der zentralen Steuerachse abermals um eine Viertel Umdrehung in die gleiche oder die entgegengesetzte Richtung, wobei die mindestens zwei Steuerrollen jeweils auf einer Steuerfläche abrollen und die Greifarme durch die Steuerrollen geführt sowie durch die Kraft des Federelements in eine geschlossene Position gebracht werden. Das erneute Öffnen der Greifarme erfolgt durch eine weitere Rotation der Steuerachse um eine Viertel Umdrehung. Dabei ist die Vorrichtung bevorzugt derart gebildet, dass ein Öffnen und Schließen der Greifarme bei jeder Rotation der Steuerachse um 90° unabhängig von der Drehrichtung erfolgt, sodass durch kontinuierliches Drehen in eine Richtung die Greifarme abwechselnd in die geöffnete und die geschlossene Position gebracht werden können.

Unter einem Greifer wird zunächst jede Vorrichtung bzw. Baugruppe verstanden, die durch Betätigung, insbesondere Verschwenken, wenigstens eines, bevorzugt zweier Bauteile einen Behälter kraftschlüssig und/oder formschlüssig fassen und halten kann. Dabei ist der Greifer zum Bilden eines Behältertransportsystems, insbesondere eines Behältertransportsterns, vorgesehen. Bevorzugt ist der Greifer zum radialen Greifen in Bezug auf eine oder "zu einer" Mittellängsachse des zu greifenden Behälters bzw. zu der Achse der Verschwenkung der Greifarme gebildet. Weiterhin bevorzugt ist der Greifer zum Einzelbehältertransport, insbesondere von stehenden Behältern, vorgesehen, wobei der Transport besonders bevorzugt lediglich in einer Ebene stattfindet und ganz besonders bevorzugt der Behälter in Bezug zum Greifer nicht rotiert und/oder nicht in eine dritte Raumrichtung bewegt wird. Insbesondere besonders bevorzugt handelt es sich bei dem Greifer um einen Glasgreifer und/oder einen Bauchgreifer.

Bei den Behältern kann es sich zunächst um einen beliebigen, ein Innenvolumen allseitig umschließenden Gegenstand aus einem beliebigen Material handeln, der bevorzugt eine Öffnung zum Befüllen und Entleeren aufweist. Bevorzugt ist der Behälter zur Aufnahme von Flüssigkeiten, insbesondere Getränken, oder Nahrungsmitteln vorgesehen. Dabei kann es sich zum Beispiel um Flaschen aus Glas oder Kunststoff, um Gläser, insbesondere Schraubdeckelgläser, um Verbundkartonverpackungen, um Dosen oder um Tuben handeln. Bevorzugt handelt es sich bei den Behältern um zur Aufnahme von Flüssigkeiten vorgesehene Behälter mit einem Verschluss, besonders bevorzugt einem Schraubverschluss, an der Oberseite des Behälters bezogen auf eine normale Aufstelllage des Behälters. Entsprechend ist der Greifer ganz besonders bevorzugt zum Einzelflaschentransport vorgesehen.

Die Greifarme sind erfindungsgemäß die Bauteile des Greifers, die durch eine Bewegung relativ zueinander mittelbar oder unmittelbar in Anlage an eine Oberfläche des zu greifenden Behälters gebracht werden können. Dazu sind die Greifarme wenigstens innerhalb eines Haltebereichs zum Halten des Behälters, bevorzugt insgesamt aufeinander zu verschwenkbar. Weiterhin bevorzugt sind die beiden Greifarme eines Greifers bzw. eines Greifarmpaares innerhalb einer gemeinsamen Ebene verschwenkbar. Dabei bilden wenigstens zwei, bevorzugt genau zwei sich gegenüberliegend angeordnete Greifarme einen Greifer bzw. ein Greifarmpaar eines Greifers. Zur verschwenkbaren Anordnung des Greifarms an einem weiteren Bauteil des Greifers, insbesondere an einem Gehäusebauteil, weist jeder der Greifarme bevorzugt eine Bohrung zur Aufnahme einer Greifarmachse auf, die besonders bevorzugt an dem weiteren Bauteil des Greifers festgelegt ist.

Dabei kann jeder der Greifarme als einzelnes, insbesondere einstückiges Bauteil oder aber als eine Baugruppe aus mehreren Bauteilen gebildet sein. Der Greifarm kann grundsätzlich aus einem beliebigen Material, beispielsweise Metall, einem Kunststoff oder einem Verbundwerkstoff gebildet sein. Weiterhin bevorzugt ist der Greifarm im Wesentlichen gerade bzw. ungekrümmt bzw. je nach Behälterform auch gekrümmt ausgebildet, insbesondere in einer Richtung zwischen der Position der verschwenkbaren Festlegung und dem Haltebereich bzw. einer Haltefläche zum Greifen des Behälters. Besonders bevorzugt sind beide Greifarme spiegelsymmetrisch zueinander gebildet und/oder angeordnet.

Jeder der Greifarme weist bevorzugt einen Haltebereich auf, in dem der zu transportierende bzw. zu greifende Behälter mit dem Greifarm in Kontakt gelangt.

Dabei ist der Haltebereich bevorzugt im Bereich eines Endes des Greifarms angeordnet und/oder weist eine Haltefläche zur zumindest abschnittsweisen Anlage am zu greifenden Behälter auf. Die Haltefläche ist ebenfalls bevorzugt jeweils auf der auf den anderen Greifarm des Greifers zuweisenden Oberfläche angeordnet. Die Haltefläche eines Greifarms ist bevorzugt gekrümmt gebildet, insbesondere mit einem Radius bzw. unterschiedlichen Radiusabschnitten. Weiterhin bevorzugt ist der Radius bzw. die oder einige Radiusabschnitte höchstens genauso groß, besonders bevorzugt kleiner als der Radius des kleinsten, zu greifenden Behälters, wodurch es lediglich zu einer Anlage des Greifarms an beiden Enden der Haltefläche am Behälter kommt und ein besonders präzises Greifen möglich ist. Alternativ kann die Haltefläche auch eine abweichende Form aufweisen, die besonders bevorzugt dann derart gestaltet ist, dass es an zwei Stellen, bevorzugt an sich gegenüberliegenden Enden der Haltefläche, zu einer Anlage an dem Behälter kommt. Entsprechend ist der Greifer bzw. das Greifarmpaar besonders bevorzugt ein 4-Punkt-Greifer, der den zu greifenden Behälter an genau vier Punkten bzw. Bereichen berührt.

Die Steuereinheit ist erfindungsgemäß die Baugruppe des Greifers, die ein gesteuertes Verschwenken der Greifarme ermöglicht. Bevorzugt erstreckt sich die Steuereinheit dabei wenigstens über die Höhe der Greifarme, d.h., in der Richtung der Verschwenkachse der Greifarme bzw. entlang der Greifarmachse. Besonders bevorzugt erstreckt sich die Steuereinheit über die gesamte Höhe des Greifers.

Die Steuereinheit ist gegenüber den übrigen Bauteilen des Greifers, insbesondere gegenüber den Greifarmen und/oder gegenüber einem Gehäusebauteil des Greifers, schwenkbar und/oder rotierbar um eine zentrale Steuerachse festgelegt. Dabei kann die zentrale Steuerachse abschnittsweise oder vollständig durch ein Bauteil der Steuereinheit gebildet und/oder abschnittsweise oder vollständig lediglich eine geometrische Achse sein, um die herum eine Rotation der Steuereinheit mittels weiterer Bauteile ermöglicht wird. Bevorzugt ist die zentrale Steuerachse wenigstens abschnittsweise als ein Bauteil, insbesondere im Bereich der Festlegung an einem Gehäusebauteil und/oder einer Halterung zur Anordnung des Greifers an einer Transportvorrichtung, ausgebildet.

Weiterhin bevorzugt weist die Steuereinheit an wenigstens einem Ende ein Betätigungselement auf, mittels dem die Steuereinheit besonders bevorzugt um die Steuerachse rotiert werden kann. Ganz besonders bevorzugt ist das Betätigungselement unmittelbar an der Steuerachse festgelegt. Ebenfalls bevorzugt ist das Betätigungselement als Dreh- bzw. Steuerkreuz gebildet, das mit einer Antriebsvorrichtung zusammenwirken kann.

Erfindungsgemäß ist die Steuereinheit zwischen den beiden Greifarmen angeordnet, d.h., die Steuereinheit verläuft wenigstens abschnittsweise in dem Raum zwischen den beiden, bevorzugt sich in einer Ebene gegenüberliegenden und aufeinander zu verschwenkbaren Greifarmen. Besonders bevorzugt ist die Steuereinheit genau in der Mitte zwischen den beiden Greifarmen und insbesondere während des gesamten Betriebs des Greifers auf der Winkelhalbierenden des Winkels zwischen beiden Greifarmen angeordnet. Ganz besonders bevorzugt schneidet dabei die zentrale Steuerachse der Steuereinheit die Winkelhalbierende rechtwinklig.

Das Federelement kann grundsätzlich einstückig oder mehrstückig aus einem beliebigen Material gebildet sein. Dabei weist der Greifer wenigstens ein Federelement, bevorzugt wenigstens ein Federelement pro Greifarmpaar und ganz besonders bevorzugt genau ein Federelement pro Greifarm auf, das insbesondere bevorzugt mit genau einem Greifarm zusammenwirkt. Das Federelement umfasst bevorzugt eine Spiralfeder und ist besonders bevorzugt aus wenigstens einer, ganz besonders bevorzugt aus genau einer Spiralfeder gebildet. Grundsätzlich kann das Federelement jedoch auch eine pneumatische-, Druck-, Zug- oder Drehstabfeder umfassen und insbesondere sein.

Dabei ist das Federelement erfindungsgemäß derart gebildet und/oder angeordnet, dass es wenigstens einen Greifarm auf den anderen Greifarm hin vorspannt, sodass durch die Federkraft die Greifarme in eine geschlossene Stellung bewegt bzw. in der einen Behälter haltenden Stellung gehalten werden. Entsprechend muss im Betrieb des Greifers zum Öffnen der Greifarme und zur Aufnahme eines Behälters eine Kraft aufgebracht werden, die dem wenigstens einen Federelement entgegenwirkt.

Bei der Steuerrolle handelt es sich um eine wenigstens abschnittsweise, bevorzugt vollständig zylindrische Rolle, die um eine Steuerrollenachse rotierbar an der Steuereinheit angeordnet ist. Alternativ können die Rollen auch eine abweichende Form, insbesondere der auf der Steuerfläche gleitenden und/oder abrollenden Oberfläche, aufweisen, die dann bevorzugt an die Form bzw. Oberfläche der inneren Steuerflächen der Greifarme angepasst ist. Bevorzugt sind zwei und besonders bevorzugt alle Steuerrollen identisch zueinander gebildet und weisen dabei insbesondere bevorzugt den gleichen Radius und/oder die gleiche Höhe auf.

Die mindestens zwei Steuerrollen sind schwenkbar und/oder rotierbar um die zentrale Steuerachse angeordnet, d.h., die Steuerrollen vollziehen im Betrieb des Greifers eine zumindest abschnittsweise Rotationsbewegung um die zentrale Steuerachse herum. Bevorzugt sind die Steuerrollen wenigstens um eine Viertel Umdrehung um die zentrale Steuerachse schwenkbar und besonders bevorzugt vollständig darum rotierbar. Bevorzugt sind die Steuerrollen dabei um ihre eigene Achse, die Steuerrollenachse, rotierbar, wobei diese Steuerrollenachse der Steuerrollen jeweils rotierend um die zentrale Steuerachse geführt ist. Die mindestens zwei Steuerrollen sind also bevorzugt entlang einer Bahnkurve, insbesondere mit einem festen Radius, um die zentrale Steuerachse herum beweglich.

Bei der inneren Steuerfläche handelt es sich bevorzugt um einen Abschnitt der Oberfläche des Greifarms, besonders bevorzugt der auf den anderen Greifarm zu gerichteten Oberfläche. Erfindungsgemäß weist die Steuerfläche dabei eine definierte Form bzw. Oberfläche auf, die es erlaubt, das Verschwenken der Greifarme mittels der auf der jeweiligen Steuerfläche gleitenden und/oder abrollenden Steuerrollen zu steuern. Besonders bevorzugt sind die Steuerflächen der beiden Greifarme derart gebildet, dass sich beide Greifarme symmetrisch zueinander öffnen und/oder schließen, was insbesondere dahingehend nicht selbstverständlich ist, da die Steuerrollen des Steuerelements in Bezug zu den Steuerflächen in entgegengesetzten Richtungen abrollen.

Die erfindungsgemäße Transportvorrichtung für Behälter, insbesondere der Transportstern, weist mehrere, insbesondere mehrere erfindungsgemäße Greifer auf, die nebeneinander entlang einer Transportrichtung der Transportvorrichtung angeordnet sind. Dabei erfolgt die Anordnung der Greifer bevorzugt in einer Ebene. Weiterhin bevorzugt ist die Transportvorrichtung bzw. die Transportrichtung gekrümmt, insbesondere rund. Ganz besonders bevorzugt weist die Transportvorrichtung über gesamten Umfang nebeneinander angeordnete Greifer auf. Dabei sind die Greifer insbesondere bevorzugt ohne Lücke zu benachbartem Greifer und/oder unmittelbar aneinander angrenzend angeordnet. Weiterhin bevorzugt sind alle Greifer der Transportvorrichtung zueinander identisch ausgebildet.

Bei einer vorteilhaften Weiterbildung des erfindungsgemäßen Greifers ist die innere Steuerfläche der Greifarme jeweils derart als gekrümmte und/oder verwinkelte Fläche gebildet, dass die darauf gleitende und/oder abrollende Steuerrolle der rotierenden Steuereinheit ein Verschwenken des Greifarms zwischen einer geöffneten und einer geschlossenen Stellung bewirken, wodurch eine besonders gleichmäßige und störungsfreie Verschwenkung der Greifarme erreicht werden kann. Unter einem gleichmäßigen Verschwenken wird zunächst eine Bewegung ohne eine sprunghafte Veränderung der (Winkel-)Geschwindigkeit verstanden. Dabei weist jeder der Greifarme bevorzugt lediglich eine Krümmung und/oder eine Verwinkelung der Steuerfläche in einer Richtung entlang des Greifarms und nicht rechtwinklig dazu bzw. in axialer Richtung der Greifarm- und/oder Steuerachse auf.

Nach einer bevorzugten Ausgestaltung des erfindungsgemäßen Greifers weist die innere Steuerfläche des Greifarms wenigstens zwei, besonders bevorzugt genau zwei hintereinander angeordnete Abschnitte auf, wobei sich der erste Abschnitt bevorzugt in Bezug zur Position der zentralen Steuerachse auf einem zu einer Greifarmachse gewandten Abschnitt des Greifarms erstreckt und/oder der zweite Abschnitt bevorzugt in Bezug zur Position der zentralen Steuerachse auf einem zum Greifen des Behälters vorgesehenen Abschnitt des Greifarms hin erstreckt, wodurch ein besonders kontinuierliches Verschwenken der Greifarme ohne sprunghafte Geschwindigkeitsänderungen erreicht werden kann.

Gemäß einer vorteilhaften Weiterbildung des erfindungsgemäßen Greifers sind an der zentralen Steuerachse der Steuereinheit zwei voneinander beanstandete Steuerrollenachsen festgelegt, an denen die Steuerrollen rotierbar festgelegt sind. Dabei ist ganz besonders bevorzugt jede der Steuerrollenachsen als Bauteil gebildet, während die zentrale Steuerachse im Bereich der Steuerrollen lediglich eine geometrische Achse ist, d.h., dass die zentrale Steuerachse in diesem Bereich nicht durch ein Bauteil gebildet wird. Ganz besonders bevorzugt haben beide Steuerrollenachsen den gleichen Abstand zur Steuerachse. Weiterhin bevorzugt verlaufen die zentrale Steuerachse und die beiden Steuerrollenachsen parallel zueinander. Bevorzugt wird auch eine Ausführung des Greifers, bei dem beide Steuerrollenachsen in Bezug zur Steuerachse sich gegenüberliegend angeordnet bzw. um 180° entlang des Umfangs um die Steuerachse versetzt sind.

Bei einer bevorzugten Weiterbildung des erfindungsgemäßen Greifers sind beide Greifarme an einer gemeinsamen Greifarmachse verschwenkbar festgelegt, die bevorzugt parallel zur Steuerachse angeordnet ist. Weiterhin bevorzugt sind auch die Greifarmachsen, wie die zentrale Steuerachse, zwischen den beiden Greifarmen angeordnet. Die Greifarme weisen bevorzugt eine Bohrung oder eine Ausnehmung zur Anordnung an der Greifarmachse auf. Weiterhin bevorzugt ist die Bohrung oder die Ausnehmung an einem Abschnitt des Greifarms angeordnet, der in Bezug zur Längsachse des Greifarms rechtwinklig von einem Ende des Greifarms absteht bzw. in Bezug zur Längsachse des Greifarms seitlich verschoben ist. Weiterhin bevorzugt sind beide Greifarme derart gebildet, dass diese auf einer Höhe gemeinsam an einer Greifarmachse festgelegt werden können und besonders bevorzugt weisen beide Greifarme jeweils an gegenüberliegenden Seiten der Bohrung oder der Ausnehmung zur Aufnahme der Greifarmachse eine Ausnehmung auf, die es ermöglicht, beide Greifarme gemeinsam auf gleicher Höhe in Bezug zueinander an der Greifarmachse anzuordnen.

Bei einer vorteilhaften Weiterbildung des erfindungsgemäßen Greifers ist an jedem der Greifarme ein Federelement zum Vorspannen auf die geschlossene Stellung des Greifers angeordnet, wodurch in besonders einfacher Weise eine Vorspannung der Greifarme auf die geschlossene Stellung hin und somit ein ausreichend starkes Greifen erreicht werden kann. Zudem stellt eine Vorspannung auf die geschlossene Stellung hin sicher, dass bei einem Funktionsausfall bzw. einer ausbleibenden Ansteuerung mittels der Steuereinheit der Behälter weiterhin gehalten wird. Bevorzugt ist jedes der Federelemente rechtwinklig zur Greifarmachse und/oder entlang der Längsrichtung des Greifarms und/oder rechtwinklig zur Richtung des Verschwenkens des Greifarms angeordnet. Bei einer alternativen Ausführung ist als Federelement eine einzige Druckfeder oder Zugfeder quer zwischen den beiden Greifarmen angeordnet.

Eine bevorzugte Ausführung des erfindungsgemäßen Greifers sieht vor, dass die Greifarmachse und/oder die zentrale Steuerachse an einem Gehäusebauteil festgelegt ist, welches bevorzugt eine Rückplatte aufweist, wobei besonders bevorzugt das Federelement an der Rückplatte festgelegt ist. Dabei ist die Rückplatte bevorzugt Teil des Gehäusebauteils und/oder an einer in Bezug zur Steuerachse gegenüberliegenden Seite der Position der Greifarme zum Greifen des Behälters angeordnet. Weiterhin bevorzugt erstrecken sich die Greifarme lediglich zu einer Seite der Rückplatte bzw. stehen an der der Steuerachse und/oder der Greifarmachse gegenüberliegenden Seite nicht über die Rückplatte hinaus. Das Gehäusebauteil ist bevorzugt einstückig und/oder als Biegeteil aus Blech oder alternativ aus Kunststoff gebildet. Weiterhin bevorzugt ist das Gehäusebauteil und insbesondere dabei die Rückplatte zur Anordnung des Greifers an einer Vorrichtung, insbesondere an einem weiteren Bauteil eines Behältertransportsterns, vorgesehen.

Gemäß einer bevorzugten Ausgestaltung des erfindungsgemäßen Greifers weist der Greifarm eine Bohrung zur Aufnahme eines Endes des Federelements auf, wobei die Bohrung bzw. das Ende des Federelements besonders bevorzugt an einer Position des Greifarms angeordnet ist, deren Abstand zur Rückplatte bzw. zum anderen Ende des Federelements wenigstens dem Abstand der Greifarmachse von der Rückplatte beträgt, wodurch zum einen eine besonders lagestabile Festlegung des Federelements am Greifarm erreicht wird und zum anderen die Federwirkung besonders genau ausgerichtet werden kann. Bevorzugt erstreckt sich die Bohrung entlang der Längsachse des Greifarms. Auch bei einer Anordnung des Federelements auf einer Oberfläche des Greifarms erfolgt die Anordnung bevorzugt an einer Position des Greifarms, deren Abstand zur Rückplatte bzw. zum anderen Ende des Federelements wenigstens dem Abstand der Greifarmachse von der Rückplatte entspricht.

Bei einer vorteilhaften Weiterbildung des erfindungsgemäßen Greifers ist ein zweites Paar Greifarme unterhalb der beiden ersten Greifarme angeordnet, wobei beide Greifarmpaare bevorzugt identisch zueinander gebildet und/oder gemeinsam mittels einer einzigen Steuereinheit betrieben werden und/oder eine feste Baugruppe bilden und/oder monolithisch als ein Element geformt sind, wodurch ein besonders sicheres Greifen des Behälters in einfacher Weise erreicht werden kann. Bevorzugt weist die Steuereinheit dazu zwei weitere Steuerrollen auf, die jeweils von den ersten Steuerrollen beabstandet angeordnet sind, wobei besonders bevorzugt jeweils zwei Steuerrollen übereinander auf einer gemeinsamen Steuerrollenachse angeordnet sind. Weiterhin bevorzugt ist zwischen den beiden Steuerrollen auf einer gemeinsamen Steuerrollenachse ein Distanzelement, insbesondere eine Distanzhülse, angeordnet. Ebenfalls bevorzugt sind wenigstens jeweils zwei Greifarme und besonders bevorzugt alle Greifarme an einer gemeinsamen Greifarmachse verschwenkbar festgelegt. Weiterhin bevorzugt sind alle Greifarmpaare exakt übereinander angeordnet und besonders bevorzugt erfolgt das Verschwenken der Greifarme aller Greifarmpaare des Greifers vollständig synchron, solange die Greifarme noch nicht an einem Behälter anliegen.

Eine besonders vorteilhafte Ausgestaltung des erfindungsgemäßen Greifers sieht vor, dass wenigstens die Steuereinheit und/oder das Gehäusebauteil des Greifers, bevorzugt der gesamte Greifer, derart symmetrisch, insbesondere spiegelsymmetrisch, aufgebaut ist bzw. sind, dass der Greifer mit einer Seite der Steuerachse in eine Richtung weisend oder aber mit dieser Seite der Steuerachse in die entgegengesetzte Richtung weisend betrieben werden kann, wozu besonders bevorzugt an beiden Seiten der Steuerachse jeweils ein Steuerkreuz angeordnet ist. Ganz besonders bevorzugt ist dabei wenigstens die Position der beiden Steuerkreuze symmetrisch zueinander in Bezug zu einer Haltevorrichtung oder einer vorgesehenen Position des Greifers, insbesondere an der Rückplatte und/oder am Gehäusebauteil, zum Festlegen an einer Transportvorrichtung.

Eine insbesondere bevorzugte Weiterbildung der Transportvorrichtung sieht vor, dass die Greifarme der Greifer derart gebildet sind, dass jeweils die aneinander angrenzenden Greifarme benachbarter Greifer, insbesondere in der geöffneten Stellung, teilweise übereinander bzw. aneinander vorbei verschwenkt werden können, sodass die Greifarme zumindest teilweise über- bzw. untereinander schwenken, überkreuzen bzw. innerhalb eines gemeinsamen Abschnitts der Transportvorrichtung unabhängig voneinander bewegt werden können, wodurch ein besonders kompakter Aufbau bzw. eine bestmögliche Raumausnutzung entlang des Umfangs der Transportvorrichtung genutzt wird.

Bei einer bevorzugten Ausführung der Transportvorrichtung sind die einzelnen Greifer derart gebildet, dass bei zwei nebeneinander an der Transportvorrichtung angeordneten, in Bezug zueinander um 180° gedrehten Greifern die Greifarme jeweils übereinander bzw. in eine Lücke der Greifarme des benachbarten Greifers verschwenkbar, insbesondere in der geöffneten Stellung der Greifarme, sind. Dies ist besonders vorteilhaft bei Greifern mit wenigstens zwei im Abstand übereinander angeordneten Greifarmpaaren. Unter einer um 180° verdrehten Anordnung der Greifer wird eine Anordnung verstanden, bei der einer der beiden Greifer in Bezug zur Orientierung des anderen Greifers um eine Achse entlang der Längsachse der Greifarme und/oder orthogonal zur Steuerachse um eine halbe Umdrehung rotiert wurde.

Gemäß einer vorteilhaften Weiterbildung der erfindungsgemäßen Transportvorrichtung ist eine Tragfläche vorgesehen, auf der ein zu transportierender Behälter mit seinem Boden auf mindestens einer Teilstrecke des Transports aufstehen kann. Dabei erstreckt sich die Tragfläche zumindest abschnittsweise, bevorzugt vollständig unterhalb einer Bahn, entlang der die einzelnen Greifer der Transportvorrichtung bewegbar sind. Bevorzugt ist der Abstand zwischen der Tragfläche und dem Greifer dabei gleichbleibend.

Eine bevorzugte Ausgestaltung der Transportvorrichtung sieht vor, dass die Tragfläche feststehend ist und nicht in der Transportrichtung umläuft, wobei der Behälter schleifend oder rutschend hierauf geführt werden kann. Dazu weist die Tragfläche besonders bevorzugt eine glatte und/oder ebene Oberfläche auf.

Alternativ ist eine Ausführung der Transportvorrichtung bevorzugt, bei der die Tragfläche umlaufend an der Transportvorrichtung befestigt ist, wobei der Behälter und die Tragfläche mit derselben Geschwindigkeit umlaufend bewegbar sind.

Ein Ausführungsbeispiel des erfindungsgemäßen Greifers wird nachstehend mit Bezug auf die Zeichnungen näher erläutert. In den Figuren zeigen:
- Fig. 1: eine perspektivische Ansicht von drei entlang eines Transportsterns angeordneten Greifern,
- Fig. 2: eine Ansicht der Oberseite der in Fig. 1 dargestellten drei Greifer,
- Fig. 3: eine Ansicht der Vorderseite der in Fig. 1 dargestellten drei Greifer,
- Fig. 4: eine Seitenansicht der in Fig. 1 dargestellten drei Greifer, und
- Fig. 5: eine schematische Ansicht der Oberseite eines Greifers zwischen einer geöffneten und geschlossenen Stellung von zwei Greifarmen in Abhängigkeit des Winkels einer Steuereinheit.

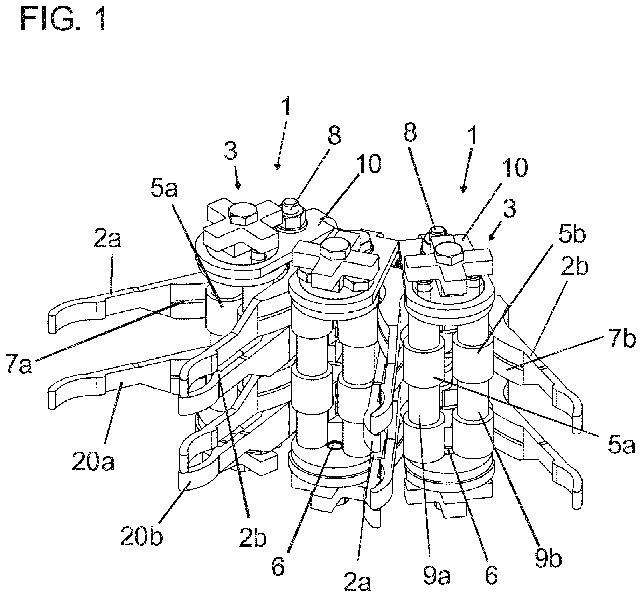

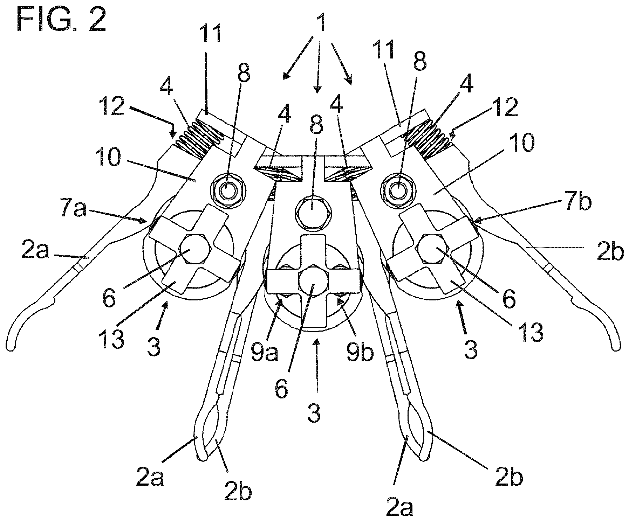

Bei einem in Fig. 1 dargestellten Ausschnitt einer als Transportstern zum Einzelflaschentransport gebildeten Transportvorrichtung sind drei Greifer 1 nebeneinander angeordnet. Jeder der Greifer 1 weist dabei zwei aus jeweils zwei sich gegenüberliegend angeordneten Greifarmen 2a, b und 20a, b gebildete Greifarmpaare 2, 20 auf, wobei alle vier Greifarme 2a, b, 20a, b eines Greifers 1 verschwenkbar an einer gemeinsamen Greifarmachse 8 angeordnet sind (siehe Fig. 2).

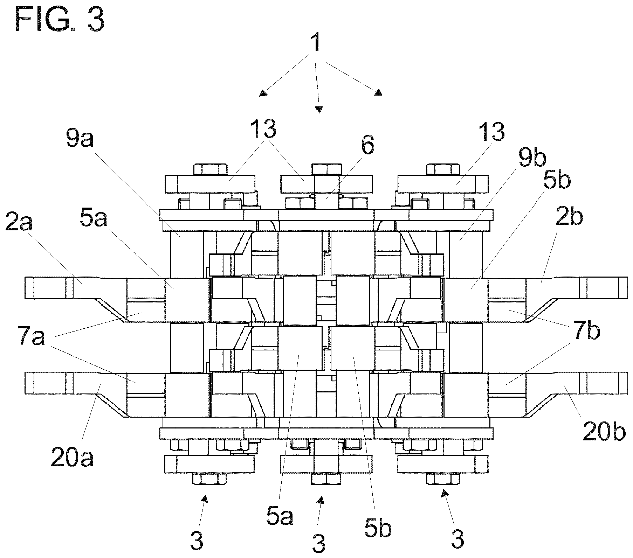

Mittig zwischen den Greifarmen 2a, b, 20a, b ist eine Steuereinheit 3 angeordnet, die rotierbar mittels einer zentralen Steuerachse 6 an einem Gehäuse 10 des Greifers 1 festgelegt ist (siehe Fig. 3) und eine Rotation der Steuereinheit 3 um 360° ermöglicht. An beiden Seiten des Greifers 1 ist ein Steuerkreuz 13 jeweils am Ende der zentralen Steuerachse 6 festgelegt.

Um die einzelnen Greifarme 2a, b, 20a, b auf eine geschlossene Stellung vorzuspannen, ist an einem Ende jedes der Greifarme 2a, b, 20a, b eine Spiralfeder 4 angeordnet, die mit einem Ende gegen eine Rückplatte 11 des Greifers 1 abgestützt ist und mit dem anderen Ende in einer Bohrung 12 festgelegt ist, die sich am Ende des Greifarms 2a, b, 20a, b entlang seiner Mittellängsachse erstreckt. Die Rückplatte 11 ist Teil des Gehäuses 10 des Greifers 1 und neben der Abstützung der Spiralfedern 4 dafür vorgesehen, den Greifer 1 an einem Transportstern bzw. dessen Rahmen festzulegen.

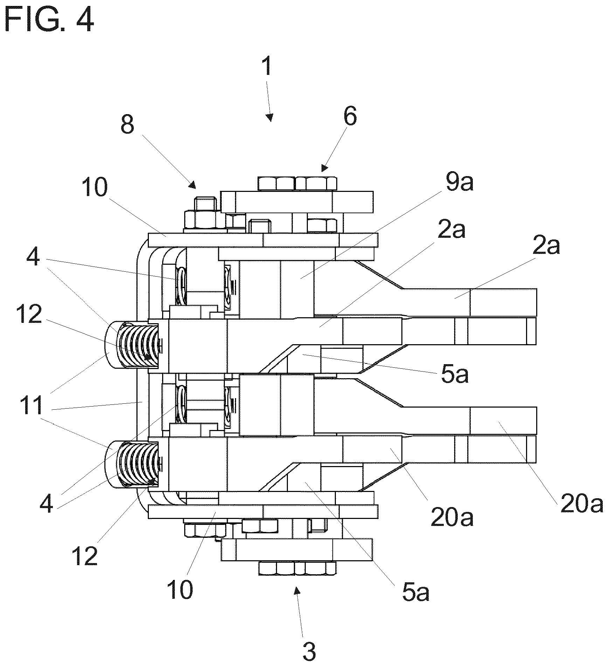

Die einzelnen Greifarme 2a, b, 20a, b sind auf das Ende zum Halten bzw. Greifen eines Behälters hin in ihrer Höhe derart verengt, dass die Greifarme 2a, b, 20a, b zweier benachbart zueinander angeordneter Greifer 1 in der geöffneten Position sich überkreuzend verschwenkt werden können, wodurch die einzelnen Greifer 1 besonders dicht aneinander anordenbar sind. Dies wird mit einer einzigen Ausgestaltung des Greifers 1 dadurch erreicht, dass die Greifarme 2a, b, 20a, b entlang der Höhe in Bezug zur Mitte der Höhe des Greifers 1 derart unsymmetrisch angeordnet sind (siehe Fig. 1 und 4), dass die Greifer 1 an der Transportvorrichtung abwechselnd um 180° montiert werden können und dann die Greifarme 2a, b, 20a, b benachbarter Greifer 1 auf unterschiedlichen Höhen angeordnet sind, sodass diese störungsfrei aneinander vorbei bzw. sich überkreuzend verschwenkt werden können.

Die Steuereinheit 3 weist zwei im Abstand sowie parallel zueinander angeordnete Steuerrollenachsen 9a, b auf, die jeweils im gleichen Abstand zur Steuerachse 6 angeordnet sind. Wird die Steuereinheit 3 um die Steuerachse 6 rotiert, so bewegen sich die beiden Steuerrollenachsen 9a, b auf einer gemeinsamen Bahnkurve um die Steuerachse 6 herum. Auf jeder der Steuerrollenachsen 9a, b ist pro Greifarmpaar 2, 20 eine Steuerrolle 5a, b rotierbar in der Höhe des jeweiligen Greifarms 2a, b, 20a, b festgelegt.

Im Bereich der Steuereinheit 3 ist die auf den jeweils anderen Greifarm 2b, a, 20b, a gerichtete Oberfläche des Greifarms 2a, b, 20a, b als Steuerfläche 7a, b gebildet, die dazu vorgesehen ist, dass darauf die Steuerrolle 5a, b abrollend geführt wird, wenn die Steuereinheit 3 gedreht wird. Über die jeweilige Steuerrolle 5a, b wird dabei eine Kraft auf den Greifarm 2a, b, 20a, b ausgeübt, die der Kraft der Spiralfeder 4 entgegenwirkt und dabei die Greifarme 2a, b, 20a, b verschwenkt.

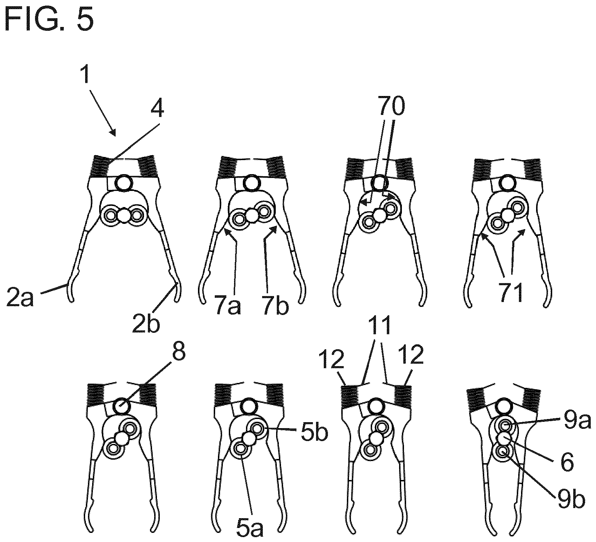

Um ein symmetrisches Verschwenken der beiden Greifarme 2a, b, 20a, b eines Greifarmpaares 2, 20 zu gewährleisten und zudem eine Funktion des Greifers 1 bei einer Rotation der Steuereinheit 3 in beide möglichen Drehrichtungen zu gewährleisten, ist zum einen jede der Steuerflächen 7a, b in zwei sich voneinander unterscheidende Steuerflächenabschnitte 70, 71 unterteilt und zum anderen sind die beiden Steuerflächen 7a, b der beiden sich gegenüberliegend angeordneten Greifarme 2a, b, 20a, b spiegelsymmetrisch zueinander geformt (siehe Fig. 5).

Wie in Figur 5 dargestellt, grenzen die beiden Abschnitte 70, 71 einer Steuerfläche 7a, b unmittelbar aneinander, wobei die Grenze zwischen den beiden Abschnitten 70, 71 am Greifarm 2a, b, 20a, b auf Höhe der Steuerachse 6 entlang des Greifarms 2a, b, 20a, b liegt. Der erste Abschnitt 70 der Steuerfläche 7a, b, der auf der Seite der Greifarmachse 8 in Bezug zur Steuerachse 6 liegt, weist eine gleichmäßige Krümmung entlang des Umfangs um die Steuerachse 6 auf. Der zweite Abschnitt 71 der Steuerfläche 7a, b, der auf der Seite des Bereichs zum Halten eines Behälters in Bezug zur Steuerachse 6 liegt, ist nahezu linear bzw. leicht in die entgegengesetzte Richtung gekrümmt und dabei derart gestaltet, dass sich der Abstand der beiden sich gegenüberliegenden Steuerflächen 7a, b der beiden Greifarme 2a, b, 20a, b eines Greifers 1 auf den Bereich zum Halten des Behälters hin vergrößert.

In Figur 5 ist in einzelnen Schritten die Verstellung eines Greifers 1 von einer geöffneten, zur Aufnahme eines Behälters vorgesehenen Stellung in eine geschlossene, zum Halten eines Behälters vorgesehene Stellung dargestellt. In der maximal geöffneten Stellung ist die Steuereinheit 3 derart gedreht, dass die beiden Steuerrollen 5a, b jeweils an der Grenze zwischen den beiden Abschnitten 70, 71 der Steuerflächen 7a, b anliegen. Zugleich sind die beiden Steuerrollen 5a, b entlang einer Geraden orientiert, die orthogonal zu einer Winkelhalbierenden der geöffneten Greifarme 2a, b, 20a, b bzw. zu einer Geraden zwischen der Steuerachse 6 und der Greifarmachse 8 angeordnet ist. Die beiden Spiralfedern 4 der Greifarme 2a, b, 20a, b sind maximal komprimiert.

Um die Greifarme 2a, b, 20a, b nun in eine geschlossene Stellung zu überführen, wird die Steuereinheit 3 um die Steuerachse 6 um 90° rotiert, wobei die eine Steuerrolle 5a auf dem zweiten Abschnitt 71 der einen Steuerfläche 7a abrollt und die andere Steuerrolle 5b auf dem ersten Abschnitt 70 der anderen Steuerfläche 7b abrollt. Beide Steuerrollen 5a, b wirken dabei der Kraft der Spiralfedern 4 entgegen und ermöglichen dabei ein geführtes und kontrolliertes Schließen der Greifarme 2a, b, 20a, b entgegen der Federkraft.

In der geschlossenen Stellung der Greifarme 2a, b, 20a, b befinden sich die beiden Steuerrollen 5a, b auf der Geraden zwischen der Steuerachse 6 und der Greifarmachse 8. Dabei sind beide Steuerrollen 5a, b im Kontakt mit beiden Steuerflächen 7a, b beider Greifarme 2a, b, 20a, b, wobei die eine Steuerrolle 5a beide ersten Abschnitte 70 und die andere Steuerrolle 5b beide zweiten Abschnitte 71 berührt.

Ein nachfolgendes Öffnen der Greifarme 2a, b, 20a, b erfolgt dann durch Rotation der Steuerachse 6 der Steuereinheit 3 um abermals 90° wahlweise in eine der beiden Drehrichtungen.

### Bezugszeichenliste

- 1: Greifer
- 2a, b: Greifarme
- 20a,: bzweites Paar Greifarme
- 3: Steuereinheit
- 4: Federelement
- 5a, b: Steuerrolle
- 6: Steuerachse
- 7a, b: Steuerfläche
- 70: erster Steuerflächenabschnitt
- 71: zweiter Steuerflächenabschnitt
- 8: Greifarmachse
- 9a, b: Steuerrollenachse
- 10: Gehäusebauteil
- 11: Rückplatte
- 12: Bohrung
- 13: Steuerkreuz

## Patentansprüche

1. Greifer (1) für ein Behältertransportsystem, mit
- zwei zueinander verschwenkbar angeordneten Greifarmen (2a, b),
- einer rotierbaren Steuereinheit (3) zum Verschwenken der Greifarme (2a, b), wobei
- die Steuereinheit (3) zwischen den Greifarmen (2a, b) angeordnet ist, sowie
- wenigstens einem die beiden Greifarme (2a, b) aufeinander zu vorspannenden Federelement (4), **dadurch gekennzeichnet, dass**
- an der Steuereinheit (3) mindestens zwei Steuerrollen (5a, b) um eine zentrale Steuerachse (6) schwenkbar und/oder rotierbar angeordnet sind und
- an jedem der Greifarme (2a, b) wenigstens eine innere Steuerfläche (7a, b) gebildet ist, und wobei
die mindestens zwei Steuerrollen (5a, b) zum Verschwenken der Greifarme (2a, b) mittels der Steuereinheit (3) auf jeweils einer Steuerfläche (7a, b) gleitend und/oderabrollend geführt sind und dabei unter der die Greifarme (2a, b) schließenden Kraft des wenigstens einen Federelements (4) die beiden Greifarme (2a, b) öffnend oder schießend bewegen, wobei die innere Steuerfläche (7a, b) der Greifarme (2a, b) jeweils derart als gekrümmte und/oder verwinkelte Fläche gebildet ist, dass die darauf gleitend und/oder abrollende Steuerrolle (5a, b) der rotierenden Steuereinheit (3) ein gleichmäßiges Verschwenken des Greifarms (2a, b), insbesondere ein winkelgleiches symmetrisches Verschwenken, zwischen einer geöffneten und einer geschlossenen Stellung bewirken.

2. Greifer nach Anspruch 1, **dadurch gekennzeichnet, dass** die innere Steuerflächen (7a, b) der Greifarme (2a, b) jeweils zwei hintereinander angeordnete Abschnitte (70, 71) aufweisen, wobei sich der erste Abschnitt (70) in Bezug zur Position der zentralen Steuerachse (6) auf einem zu einer Greifarmachse (8) gewandten Abschnitt des Greifarms (2a, b) erstreckt und/oder der zweite Abschnitt (71) in Bezug zur Position der zentralen Steuerachse (6) auf einem zum Greifen des Behälters vorgesehenen Abschnitt des Greifarms (2a, b) hin erstreckt.

3. Greifer nach wenigstens einem der vorhergehenden Ansprüche, **dadurch gekennzeichnet, dass** der erste Abschnitt (70) der Steuerfläche (7a, b) gekrümmt und/oder der zweite Abschnitt (71) der Steuerfläche (7a, b) linear oder schwächer gekrümmt verläuft.

4. Greifer nach wenigstens einem der vorhergehenden Ansprüche, **dadurch gekennzeichnet, dass** an der Steuerachse (6) der Steuereinheit (3) zwei voneinander beanstandete Steuerrollenachsen (9a, b) festgelegt sind, an denen die Steuerrollen (5a, b) rotierbar festgelegt sind.

5. Greifer nach wenigstens einem der vorhergehenden Ansprüche, **dadurch gekennzeichnet, dass** beide Steuerrollenachsen (9a, b) in Bezug zur Steuerachse (6) sich gegenüberliegend angeordnet sind.

6. Greifer nach wenigstens einem der vorhergehenden Ansprüche, **dadurch gekennzeichnet, dass** beide Greifarme (2a, b) an einer gemeinsamen Greifarmachse (8) verschwenkbar festgelegt sind, die parallel zur Steuerachse (6) angeordnet ist.

7. Greifer nach wenigstens einem der vorhergehenden Ansprüche, **dadurch gekennzeichnet, dass** an jedem der Greifarme (2a, b) ein Federelement (4) zum Vorspannen auf die geschlossene Stellung des Greifers (1) angeordnet ist.

8. Greifer nach wenigstens einem der vorhergehenden Ansprüche, **dadurch gekennzeichnet, dass** die Greifarmachse (8) und/oder die zentrale Steuerachse (6) an einem Gehäusebauteil (10) festgelegt ist, welches eine Rückplatte (11) aufweist, wobei das Federelement (4) an der Rückplatte (11) festgelegt ist.

9. Greifer nach wenigstens einem der vorhergehenden Ansprüche, **dadurch gekennzeichnet, dass** der Greifarm (2a, b) eine Bohrung (12) zur Aufnahme eines Endes des Federelements (4) aufweist, wobei die Bohrung (12) bzw. das Ende des Federelements (4) an einer Position des Greifarms (2a, b) angeordnet ist, deren Abstand zur Rückplatte (11) bzw. zum anderen Ende des Federelements (4) wenigstens dem Abstand der Greifarmachse (8) von der Rückplatte (11) entspricht.

10. Greifer nach wenigstens einem der vorhergehenden Ansprüche, **dadurch gekennzeichnet, dass** ein zweites Paar Greifarme (20a, b) unterhalb der beiden ersten Greifarme (2a, b) angeordnet ist, wobei beide Greifarmpaare (2a, b, 20a, b) identisch zueinander gebildet und/oder gemeinsam mittels einer Steuereinheit (3) betrieben werden und/oder eine feste Baugruppe bilden und/oder monolithisch als ein Element geformt sind.

11. Greifer nach wenigstens einem der vorhergehenden Ansprüche, **dadurch gekennzeichnet, dass** wenigstens die Steuereinheit (3) und/oder das Gehäusebauteil (10) des Greifers (1), bevorzugt der gesamte Greifer (1), derart symmetrisch aufgebaut ist, dass dieser mit einer Seite der Steuerachse (6) in eine Richtung weisend oder aber mit dieser Seite der Steuerachse (6) in die entgegengesetzte Richtung weisend betrieben werden kann, wozu besonders bevorzugt an beiden Seiten der Steuerachse (6) jeweils ein Steuerkreuz (13) angeordnet ist.

12. Greifer nach wenigstens einem der vorhergehenden Ansprüche, **dadurch gekennzeichnet, dass** gegenüberliegende, zusammenwirkende Greifarme (2a, b) nicht über ein form- und/oder kraftschlüssiges Element, wie beispielsweise eine Verzahnung gekoppelt sind und sich nicht gegenseitig antreiben.

13. Verfahren zum Greifen eines Behälters mittels eines Greifers, wobei der Greifer mindestens zwei zueinander verschwenkbar angeordnete Greifarme (2a, b), wenigstens ein die beiden Greifarme (2a, b) aufeinander zu vorspannendes Federelement (4) sowie eine zwischen den Greifarmen (2a, b) angeordnete rotierbaren Steuereinheit (3) zum Verschwenken der Greifarme (2a, b) aufweist, wobei an jedem der Greifarme (2a, b) wenigstens eine innere Steuerfläche (7a, b) vorgesehen auf der eine um eine zentrale Steuerachse (6) der Steuereinheit (3) schwenkbare und/oder rotierbare Steuerrolle (5) gleitend oder abrollend geführt ist,), und wobei der Greifer nach einem der Ansprüche 1 bis 12 ausgebildet ist, mit den Schritten ausgehend von einer geschlossenen Position der Greifarme (2a, b):
- Rotieren der zentralen Steuerachse (6) um 90°, wobei die mindestens zwei Steuerrollen (5a, b) jeweils auf einer Steuerfläche (7a, b) gleiten und/oder abrollen und die Greifarme (2a, b) entgegen der Kraft des Federelements (4) in eine geöffnete Position bringen,
- Aufnahme eines Behälters in einen Haltebereich zwischen den beiden Greifarmen (2a, b), und
- Rotieren der zentralen Steuerachse (6) um 90° in die gleiche oder die entgegengesetzte Richtung, wobei die mindestens zwei Steuerrollen (5a, b) jeweils auf einer Steuerfläche (7a, b) gleiten und/oder abrollen und die Greifarme (2a, b) durch die Steuerrollen (5a, b) geführt sowie durch die Kraft des Federelements (4) in eine geschlossene Position gebracht werden.

14. Transportvorrichtung für Behälter, **dadurch gekennzeichnet, dass** mehrere Greifer (1) nach einem oder mehreren der vorhergehenden Ansprüche 1 bis 12 nebeneinander entlang einer Transportrichtung der Transportvorrichtung angeordnet sind.

15. Transportvorrichtung nach Anspruch 14, **dadurch gekennzeichnet, dass** die Greifarme (2a, b, 20a, b) der Greifer (1) derart gebildet sind, dass jeweils die aneinander angrenzenden Greifarme (2a, b, 20a, b) benachbarter Greifer (1) teilweise übereinander bzw. aneinander vorbei verschwenkt werden können.

16. Transportvorrichtung nach wenigstens einem der vorhergehenden Ansprüche 14 oder 15, **dadurch gekennzeichnet, dass** die einzelnen Greifer (1) derart gebildet sind, dass bei zwei nebeneinander an der Transportvorrichtung angeordneten, in Bezug zueinander um 180° gedrehten Greifern (1) die Greifarme (2a, b, 20a, b) jeweils übereinander bzw. in eine Lücke der Greifarme (2a, b, 20a, b) des benachbarten Greifers (1) verschwenkbar sind.

17. Transportvorrichtung nach wenigstens einem der vorhergehenden Ansprüche 14 bis 16, **dadurch gekennzeichnet, dass** eine Tragfläche vorgesehen ist, auf der ein zu transportierender Behälter mit seinem Boden auf mindestens einer Teilstrecke des Transports aufstehen kann.

18. Transportvorrichtung nach Anspruch 17, **dadurch gekennzeichnet, dass** die Tragfläche feststehend ist und nicht umläuft, wobei der Behälter schleifend oder rutschend hierauf geführt werden kann.

19. Transportvorrichtung nach Anspruch 17, **dadurch gekennzeichnet, dass** die Tragfläche umlaufend an der Transportvorrichtung befestigt ist, wobei der Behälter und die Tragfläche mit derselben Geschwindigkeit umlaufend bewegbar sind.

## Claims

1. Gripper (1) for a container transport system, having
- two gripper arms (2a, b) that can pivot towards one another,
- a rotatable control unit (3) pivoting the gripper arms (2a, b),
wherein
- the control unit (3) is arranged between the gripper arms (2a, b), and
- at least one spring element (4) for preloading the two gripper arms (2a, b) apart from each another, **characterised in that**
- at least two control rollers (5a, b) are arranged at the control unit (3) such as to be able to pivot and/or rotate about a central control axis (6), and
- at least one inner control surface (7a, b) is formed at each of the gripper arms (2a, b), and wherein
in order to pivot the gripper arms (2a, b), the at least two control rollers (5a, b) are guided by means of the control unit (3) such as to slide and/or roll in each case on a control surface (7a, b), and in this situation, under the force of the at least one spring element (4) closing the gripper arms (2a, b), move the two gripper arms (2a, b) so as to open or close, wherein the inner control surface (7a, b) of the gripper arms (2a, b) is configured in each case as a cambered and/or angled surface in such a way that the control roller (5a, b) of the rotating control unit (3) sliding and/or rolling on it has the effect of causing a uniform pivoting of the gripper arm (2a, b), in particular an equiangular symmetrical pivoting, between an opened and a closed position.

2. Gripper according to claim 1, **characterised in that** the inner control surfaces (7a, b) of the gripper arms (2a, b) in each case comprise two sections (70, 71) arranged behind one another, wherein the first section (70) extends in relation to the position of the central control axis (6) on a section of the gripper arm (2a, b) facing towards a gripper arm axis (8), and/or the second section (71) extends in relation to the position of the central control axis (6) on a section of the gripper arm (2a, b) provided for gripping the container.

3. Gripper according to at least one of the preceding claims, **characterised in that** the first section (70) of the control surface (7a, b) runs in a cambered manner, and/or the second section (71) of the control surface (7a, b) runs in a linear or less cambered manner.

4. Gripper according to at least one of the preceding claims, **characterised in that** two control roller axes (9a, b), spaced apart from one another, are secured to the control axis (6) of the control unit (3), to which the control rollers (5a, b) are rotatably secured.

5. Gripper according to at least one of the preceding claims, **characterised in that** the two control roller axes (9a, b) are arranged opposite one another in relation to the control axis (6).

6. Gripper according to at least one of the preceding claims, **characterised in that** both gripper arms (2a, b) are secured in a pivoting manner to a common gripper arm axis (8), which is arranged parallel to the control axis (6).

7. Gripper according to at least one of the preceding claims, **characterised in that** a spring element (4) is arranged at each of the gripper arms (2a, b) for preloading towards the closed position of the gripper (1).

8. Gripper according to at least one of the preceding claims, **characterised in that** the gripper arm axis (8) and/or the central control axis (6) is secured to a housing component (10), which comprises a back plate (11), wherein the spring element (4) is secured to the back plate (11).

9. Gripper according to at least one of the preceding claims, **characterised in that** the gripper arm (2a, b) comprises a borehole (12) for receiving one end of the spring element (4), wherein the borehole (12) or the end of the spring element (4) respectively is arranged at a position of the gripper arm (2a, b) of which the interval spacing to the back plate (11), or to the other end of the spring element (4) respectively, corresponds to the distance interval of the gripper arm axis (8) from the back plate (11).

10. Gripper according to at least one of the preceding claims, **characterised in that** a second pair of gripper arms (20a, b) is arranged beneath the two gripper arms (2a, b), wherein both pairs of gripper arms (2a, b, 20a, b) are configured as identical to each another and/or are operated in common by means of a control unit (3) and/or form a fixed module and/or are formed monolithically as one element.

11. Gripper according to at least one of the preceding claims, **characterised in that** at least the control unit (3) and/or the housing component (10) of the gripper (1), and preferably the entire gripper (1), is/are configured as symmetrical, in such a way that it/they can be operated with one side of the control axis (6) pointing in one direction, or, alternately, with this side of the control axis (6) pointing in the opposite direction, for which purpose, for particular preference, in each case a control cross (13) is arranged on both sides of the control axis (6).

12. Gripper according to at least one of the preceding claims, **characterised in that** opposing and interacting gripper arms (2a, b) are not coupled by means of an element in positive and/or non-positive fit, such as a toothed arrangement, and are not driven in mutual opposition.

13. Method for gripping a container by means of a gripper, wherein the gripper comprises at least two gripper arms (2a, b) arranged such as to be able to pivot towards one another, at least one spring element (4) for preloading the two gripper arms (2a, b) apart from one another, and a rotatable control unit (3) arranged between the gripper arms (2a, b) for pivoting the gripper arms (2a, b), wherein at each of the gripper arms (2a, b) at least one inner control surface (7a, b) is provided, on which a control roller (5), which can pivot and/or rotate about a central control axis (6) of the control unit (3), is guided such as to slide or roll, and wherein the gripper is configured in accordance with any one of claims 1 to 12, with the steps, starting from a closed position of the gripper arms (2a, b):
- Rotating of the central control axis (6) about 90°, wherein the at least two control rollers (5a, b) in each case slide and/or roll on a control surface (7a, b), and bring the gripper arms (2a, b) against the force of the spring element (4) into an opened position,
- receiving a container in a holding region between the two gripper arms (2a, b), and
- rotating of the central control axis (6) by 90° in the same or opposite direction, wherein the at least two control rollers (5a, b) in each case slide and/or roll on a control surface (7a, b), and the gripper arms (2a, b) are guided by the control rollers (5a, b), and are brought by the force of the spring element (4) into a closed position.

14. Transport device for containers, **characterised in that** several grippers (1) in accordance with one or more of the preceding claims 1 to 12 are arranged next to one another along a transport direction of the transport device.

15. Transport device according to claim 14, **characterised in that** the gripper arms (2a, b, 20a, b) of the grippers (1) are configured in such a way that in each case the gripper arms (2a, b, 20a, b) of adjacent grippers (1) can in part be pivoted above another or past one another.

16. Transport device according to at least one of the preceding claims 14 or 15, **characterised in that** the individual grippers (1) are configured in such a way that, with two grippers (1) arranged next to one another at the transport device and rotated by 180° in relation to one another, the gripper arms (2a, b, 20a, b) can in each case be pivoted above one another or into a gap of the gripper arms (2a, b, 20a, b) of the adjacent gripper (1).

17. Transport device according to at least one of the preceding claims 14 or 16, **characterised in that** a carrying surface is provided, on which a container which is to be transported can stand upright with its base on at least a part section of the transport.

18. Transport device according to claim 17, **characterised in that** the carrying surface is fixed and does not circulate, wherein the container can be conveyed on it in a sliding or slipping manner.

19. Transport device according to claim 17, **characterised in that** the carrying surface is secured in a circulating manner at the transport device, wherein the container and the carrying surface can be moved such as to circulate at the same speed.

## Revendications

1. Grappin (1) pour un système de transport de contenants, avec
- deux bras de préhension (2a, b) disposés de manière à pouvoir pivoter l'un par rapport à l'autre,
- une unité de commande rotative (3) pour faire pivoter les bras de préhension (2a, b),
dans lequel
- l'unité de commande (3) est disposée entre les bras de préhension (2a, b), ainsi
- qu'au moins un élément formant ressort (4) précontraignant les deux bras de préhension (2a, b) l'un sur l'autre, **caractérisé en ce que**
- au moins deux galets de commande (5a, b) sont disposés de manière à pouvoir pivoter et/ou tourner autour d'un axe de commande central (6) sur l'unité de commande (3), et
- au moins une surface de commande intérieure (7a, b) est formée sur chacun des bras de préhension (2a, b), et dans lequel
les au moins deux galets de commande (5a, b) sont guidés de manière à glisser et/ou à rouler sur respectivement une surface de commande (7a, b) au moyen de l'unité de commande (3) pour faire pivoter les bras de préhension (2a, b) et déplacent ce faisant les deux bras de préhension (2a, b) en les ouvrant ou les fermant sous l'effet de la force, fermant les bras de préhension (2a, b), de l'au moins un élément formant ressort (4), dans lequel
la surface de commande intérieure (7a, b) des bras de préhension (2a, b) est formée respectivement en tant que surface incurvée et/ou en angle de telle manière que le galet de commande (5a, b), glissant et/ou roulant sur celle-ci, de l'unité de commande rotative (3) entraîne un pivotement homogène du bras de préhension (2a, b), en particulier un pivotement symétrique à angle égal entre une position ouverte et une position fermée.

2. Grappin selon la revendication 1, **caractérisé en ce que** les surfaces de commande intérieures (7a, b) des bras de préhension (2a, b) présentent respectivement deux sections (70, 71) disposées l'une derrière l'autre, dans lequel la première section (70) s'étend par rapport à la position de l'axe de commande central (6) sur une section, tournée vers un axe de bras de préhension (8), du bras de préhension (2a, b) et/ou la deuxième section (71) s'étend par rapport à la position de l'axe de commande central (6) sur une section, prévue pour la préhension du contenant, du bras de préhension (2a, b).

3. Grappin selon au moins l'une quelconque des revendications précédentes, **caractérisé en ce que** la première section (70) de la surface de commande (7a, b) s'étend de manière incurvée et/ou la deuxième section (71) de la surface de commande (7a, b) s'étend de manière linéaire ou avec une incurvation plus faible.

4. Grappin selon au moins l'une quelconque des revendications précédentes, **caractérisé en ce que** sont fixés, sur l'axe de commande (6) de l'unité de commande (3), deux axes de galet de commande (9a, b) tenus à distance l'un de l'autre, sur lesquels les galets de commande (5a, b) sont fixés de manière rotative.

5. Grappin selon au moins l'une quelconque des revendications précédentes, **caractérisé en ce que** les deux axes de galet de commande (9a, b) sont disposés de manière à se faire face par rapport à l'axe de commande (6).

6. Grappin selon au moins l'une quelconque des revendications précédentes, **caractérisé en ce que** les deux bras de préhension (2a, b) sont fixés de manière à pouvoir pivoter sur un axe de bras de préhension (8) commun, qui est disposé de manière parallèle par rapport à l'axe de commande (6).

7. Grappin selon au moins l'une quelconque des revendications précédentes, **caractérisé en ce qu'**un élément formant ressort (4) pour la précontrainte sur la position fermée du grappin (1) est disposé sur chacun des bras de préhension (2a, b).

8. Grappin selon au moins l'une quelconque des revendications précédentes, **caractérisé en ce que** l'axe de bras de préhension (8) et/ou l'axe de commande central (6) sont fixés sur un composant de boîtier (10), lequel présente une plaque arrière (11), dans lequel l'élément formant ressort (4) est fixé sur la plaque arrière (11).

9. Grappin selon au moins l'une quelconque des revendications précédentes, **caractérisé en ce que** le bras de préhension (2a, b) présente un alésage (12) pour loger une extrémité de l'élément formant ressort (4), dans lequel l'alésage (12) ou l'extrémité de l'élément formant ressort (4) est disposé ou disposée sur une position du bras de préhension (2a, b), dont l'espacement par rapport à la plaque arrière (11) ou à l'autre extrémité de l'élément formant ressort (4) correspond au moins à l'espacement de l'axe de bras de préhension (8) par rapport à la plaque arrière (11).

10. Grappin selon au moins l'une quelconque des revendications précédentes, **caractérisé en ce qu'**une deuxième paire de bras de préhension (20a, b) est disposée sous les deux premiers bras de préhension (2a, b), dans lequel les deux paires de bras de préhension (2a, b, 20a, b) sont formées de manière identique l'une par rapport à l'autre et/ou fonctionnent conjointement au moyen d'une unité de commande (3) et/ou forment un module fixe et/ou sont formées de manière monolithique en tant qu'un élément.

11. Grappin selon au moins l'une quelconque des revendications précédentes, **caractérisé en ce qu'**au moins l'unité de commande (3) et/ou le composant de boîtier (10) du grappin (1), de manière préférée la totalité du grappin (1), sont élaborés de manière symétrique de telle manière que celui-ci peut fonctionner en pointant dans une direction avec un côté de l'axe de commande (6) ou en pointant dans la direction opposée toutefois avec ledit côté de l'axe de commande (6), respectivement une croix de commande (13) étant disposée à cet effet de manière particulièrement préférée sur les deux côtés de l'axe de commande (6).

12. Grappin selon au moins l'une quelconque des revendications précédentes, **caractérisé en ce que** des bras de préhension (2a, b) se faisant face, coopérant ne sont pas couplés par l'intermédiaire d'un élément à complémentarité de forme et/ou à force, comme une denture et ne s'entraînent pas mutuellement.

13. Procédé de préhension d'un contenant au moyen d'un grappin, dans lequel le grappin présente au moins deux bras de préhension (2a, b) disposés de manière à pouvoir pivoter l'un par rapport à l'autre, au moins un élément formant ressort (4) précontraignant les deux bras de préhension (2a, b) l'un sur l'autre ainsi qu'une unité de commande rotative (3) disposée entre les bras de préhension (2a, b) pour faire pivoter les bras de préhension (2a, b), dans lequel au moins une surface de commande intérieure (7a, b) est guidée de manière à glisser ou à rouler sur le galet de commande (5) pouvant pivoter et/ou pouvant tourner autour d'un axe de commande central (6) de l'unité de commande (3) sur chacun des bras de préhension (2a, b) et dans lequel le grappin est réalisé selon l'une quelconque des revendications 1 à 12,
avec les étapes en partant d'une position fermée des bras de préhension (2a, b) :
- de rotation de l'axe de commande central (6) de 90°, dans lequel les au moins deux galets de commande (5a, b) glissent ou roulent respectivement sur une surface de commande (7a, b) et amènent les bras de préhension (2a, b) dans une position ouverte à l'encontre de la force de l'élément formant ressort (4),
- de logement d'un contenant dans une zone de maintien entre les deux bras de préhension (2a, b), et
- de rotation de l'axe de commande central (6) de 90° dans la même direction ou dans la direction opposée, dans lequel les au moins deux galets de commande (5a, b) glissent et/ou roulent respectivement sur une surface de commande (7a, b) et les bras de préhension (2a, b) sont guidés par les galets de commande (5a, b) et sont amenés dans une position fermée par la force de l'élément formant ressort (4).

14. Dispositif de transport pour des contenants, **caractérisé en ce que** plusieurs grappins (1) selon l'une quelconque ou plusieurs des revendications précédentes 1 à 12 sont disposés côte à côte le long d'une direction de transport du dispositif de transport.

15. Dispositif de transport selon la revendication 14, **caractérisé en ce que** les bras de préhension (2a, b, 20a, b) des grappins (1) sont formés de telle manière que respectivement les bras de préhension (2a, b, 20a, b) jouxtant l'un contre l'autre de grappins (1) adjacents peuvent être pivotés en partie les uns au-dessus des autres ou le long des uns des autres.

16. Dispositif de transport selon au moins l'une quelconque des revendications précédentes 14 ou 15, **caractérisé en ce que** les divers grappins (1) sont formés de telle manière qu'en cas de deux grappins (1) disposés côte à côte sur le dispositif de transport, tournés l'un par rapport à l'autre de 180°, les bras de préhension (2a, b, 20a, b) peuvent être pivotés respectivement les uns au-dessus des autres ou dans un interstice des bras de préhension (2a, b, 20a, b) du grappin (1) adjacent.

17. Dispositif de transport selon au moins l'une quelconque des revendications précédentes 14 à 16, **caractérisé en ce qu'**une surface porteuse est prévue, sur laquelle un contenant à transporter peut se tenir à la verticale par son fond sur au moins un parcours partiel du transport.

18. Dispositif de transport selon la revendication 17, **caractérisé en ce que** la surface porteuse est immobile et ne circule pas en périphérie, dans lequel le contenant peut être guidé sur celle-ci en traînant ou en glissant sur celle-ci.

19. Dispositif de transport selon la revendication 17, **caractérisé en ce que** la surface porteuse est fixée en périphérie sur le dispositif de transport, dans lequel le contenant et la surface porteuse peuvent être déplacés en périphérie avec la même vitesse.
